# EUROPÄISCHE PATENTSCHRIFT

(11) **EP 1 374 052 B1**
(45) Veröffentlichungstag und Bekanntmachung des Hinweises auf die Patenterteilung: **30.08.2006**
(21) Anmeldenummer: 02706511.9
(22) Anmeldetag: 27.03.2002
(51) Int. Cl.: G06F 11/00

(54) **VERFAHREN ZUM BETRIEB EINES VERTEILTEN COMPUTERSYSTEMS**
METHOD FOR OPERATING A DISTRIBUTED COMPUTER SYSTEM
PROCEDE D'EXPLOITATION D'UN SYSTEME INFORMATIQUE REPARTI

(30) Priorität: 30.03.2001 AT 5112001
(43) Veröffentlichungstag der Anmeldung: 02.01.2004
(73) Patentinhaber: Tttech Computertechnik AG, 1040 Wien (AT)
(72) Erfinder: POLEDNA, Stefan, A-3400 Klosterneuburg (AT)
(74) Vertreter: Matschnig, Franz
(86) Internationale Anmeldenummer: PCT/AT2002/000094
(87) Internationale Veröffentlichungsnummer: WO 2002/079972

(56) Entgegenhaltungen:
- DE-A- 19 753 288
- US-A- 4 569 015
- BAUER G ET AL: "TRANSPARENT REDUNDANCY IN THE TIME-TRIGGERED ARCHITECTURE" PROCEEDINGS INTERNATIONAL CONFERENCE ON DEPENDABLE SYSTEMS AND NETWORKS. DSN 2000. NEW YORK, NY, JUNE 25-28, 2000, INTERNATIONAL CONFERENCE ON DEPENDABLE SYSTEMS AND NETWORKS, LOS ALAMITOS, CA: IEEE COMP. SOC, US, 25. Juni 2000 (2000-06-25), Seiten 5-13, XP000988634 ISBN: 0-7695-0708-5 in der Anmeldung erwähnt
- KOPETZ H ET AL: "Tolerating Arbitrary Node Failures in the Time-Triggered Architecture" WHITEPAPER, März 2001 (2001-03), XP002196878

## Beschreibung

Die Erfindung betrifft ein Verfahren zum Betrieb eines verteilten Computersystems mit Netzwerkknoten, die jeweils zumindest eine Knotensteuerung und einen Kommunikationskontroller aufweisen, wobei die Kommunikationskontroller über zumindest einen Kommunikationskanal miteinander verbunden sind, zwischen dem Kommunikationskontroller und der Knotensteuerung eines Netzwerkknotens eine Fehlertoleranzschicht vorgesehen ist, welche dazu eingerichtet ist zwischen den Netzwerkknoten ausgetauschte Nachrichten zu empfangen, und die Fehlertoleranzschicht anhand von empfangenen Informationen, welche den Zustand zumindest eines Netzwerkknoten betreffen, mittels eines Abstimmungsverfahrens über das Funktionieren des zumindest einen Netzwerkknoten entscheidet, wobei das Abstimmungsergebnis als Ausgangssignal an einem oder mehreren Hardwareausgängen des Kommunikationskontrollers zur Verfugung gestellt wird und der zumindest eine Netzwerkknoten in Abhängigkeit von diesem Ausgangssignal gesteuert wird.

Für Computersysteme mit Sicherheits-, Verfügbarkeits- und Fehlertoleranzanforderungen werden typischerweise redundante Kanäle und Komponenten verwendet, um den genannten Anforderungen gerecht zu werden - siehe hierzu auch: "Real-Time Systems: Design Principles for Distributed Embedded Applications; H. Kopetz, Kluwer Academic Publishers, 1997." Diese redundanten Kanäle und Komponenten müssen in Echtzeitanwendungen typischerweise von einem Sensor über einen Rechnerknoten bis hin zu einem Aktuator ausgeführt sein. Dadurch entstehen gegenüber nicht redundanten Systemen wesentlich höhere Kosten.

In manchen Anwendungen ist es aufgrund der Anwendungseigenschaften nicht notwendig, jeden der Kanäle bzw. Komponenten vollständig redundant auszuführen. Als Beispiel sei hier Brake-by-wire im Automobilbereich genannt. Da ein typischer Personenkraftwagen über vier gebremste Räder verfügt, kann der Ausfall einer einzelnen Rad-Bremse toleriert werden. Allerdings ist dabei sicherzustellen, dass eine Bremse niemals so ausfällt, dass ein Rad blockiert oder zu stark gebremst wird. Dadurch würde der Personenkraftwagen instabil werden.

Damit ein solcher unkontrollierter Ausfall einer Komponente in solchen Anwendungen sichergestellt werden kann, werden dedizierte Steuerverbindungen, sogenannte Abschaltleitungen, zwischen den Aktuatoren und jedem Netzwerkknoten eingesetzt.

Für hochzuverlässige Systeme, wie Brake-by-wire Anwendungen, setzen sich echtzeitfähige Kommunikationssysteme durch, die im Gegensatz zu ereignisgesteuerten Kommunikationsprotokollen (z. B. CAN) Fehlertoleranz sowie minimale Schwankung in der Übertragungszeit (latency) bieten. TTP/C ist beispielsweise ein derartiges zeitgesteuertes Kommunikationssystem, welches bereits Marktreife erlangt hat und bietet neben der zuverlässigen Übertragung von Daten eine Reihe von höheren Diensten wie Uhrensynchronisation und Membership an.

Unter Membership wird hierbei ein Dienst verstanden, der konsistente Informationen über den Betriebszustand (ordnungsgemäß oder fehlerhaft) aller Knoten des Systems zu definierten Zeitpunkten - den Membershippunkten - an alle Knoten übermittelt Die Länge und die Schwankung des Intervalle zwischen einem Mernebershippunkt und dem Zeitpunkt, an welchem die konsistente Membershipinformation den anderen Knoten bekannt ist, sind ein Qualitätsmerkmal der Dienstparameter des Membershipdienstes. Ein gutes Membershipservice hat eine geringe maximale Verzögerungszeit zwischen dem. Zeitpunkt einer relevanten Zustandsänderung eines Knoten und dem Zeitpunkt, an welchem alle anderen Knoten von dieser Zustandsänderung auf konsistente Weise erfahren haben. Unter konsistent wird in diesem Zusammenhang verstanden, dass alle Netzwerknoten die selbe Information erhalten. So erhalten z. B. im Fall eines in einem Netzwerkknoten auftretenden Fehlers alle Netzwerkknoten die selbe Fehlermeldung.

Der Membershipdienst wartet in jedem Kommunikationskontroller des Netzwerkes einen Membership - Vektor, in welchem je einem Sendeknoten ein Bit zugeordnet ist. Ein Sender, der in diesem Bitvektor als "vorhanden" gekennzeichnet ist, wird als in der Membership betrachtet. Jedem konsistenten Zeitschlitz (C-Slot) einer TDMA-Runde (Time Division Multiple Access) ist im Rahmen des TTP/C genau einem Bit in dem "Membership-Vektor" statisch zugeordnet.

Ein wesentlicher Sicherheitsvorteil der zeitgesteuerten Architektur, wie sie in TTP/C implementiert ist, ist das Fehlen von Steuersignalen in der Kommunikation zwischen Kommumkationskontroller und Knotensteuerung (Recheneinheit). Dadurch kann sichergestellt werden, dass ein Fehler nicht propagiert werden kann. Durch die strikte Ausschließung von Steuersignalen in der Kommunikation zwischen Kommunikationskontroller und Knotensteuerung (Recheneinheit) gibt es bei den bekannten Systemen keine Möglichkeit für andere Recheneinheiten bzw. für auf diesen ablaufende Softwareapplikationen auf das Verhalten einer fehlerhaften Recheneinheit bzw. Softwareappukation Einfluss zu nehmen. Diese Tatsache ist insbesondere dann von Relevanz, wenn das fehlerhafte Verhalten einer Recheneinheit die Sicherheit des Gesamtsystems gefährdet. Beispielsweise könnte in einem "Brake-by-wire" System, d. h. in einem System, bei welchem die Bremssteuerung rein elektronisch erfolgt, eine fehlerhafte Softwareapplikation eines der vier Räder eines Automobils blockieren, wodurch die Kontrolle über das Verhalten des gesamben Fahrzeugs trotz Eingriff der restlichen Radcomputer unmöglich werden kann. Eine generelle Übertragung von Steuerimpulsen stellt jedoch auch für sich eine Gefahrenquelle für die Sicherheit des Gesamtsystems dar. Auch dedizierbe Abschaltleitungen führen zu einem erhöhten Ressourcenbedarf sowie zur Einführung zusätzlicher Fehlerquellen.

Ein solches Verfahren ist aus dem Dokument Bauer G. et al. "Transparent Redundancy in the Tme-Triggered Architecture" Preceedings of the international conference on Dependable Systems and Networks (DSN 2000), New York, IEEE Press. p. 5 -13 bekannt geworden. Dabei erfolgt die Übertragung der Ausgangssignale über den Bus und die Empfängerknoten werden nun indirekt gesteuert, nämlich durch Veranlassen eigenverantwortlicher Maßnahmen der Empfängerknoten, sodass eine fehlertolerante Direktübertragung von Steuersignalen zwischen den Knoten nicht möglich ist.

Das Dokument Kopetz H. et al "Tolerating Arbitrary Node Failures in the Time-Triggered Architecture", Whitepaper, März 2001, beschreibt die Fehlertoleranz und die Möglichkeiten der Fehlerverarbeitung in einer Architektur, welche das TTP/C Protokoll verwendet, beispielsweise auch einen Resynchronisationsmechanismus im Falle von Mehrfachfehlern.

Es ist eine Aufgabe der Erfindung die oben genannten Nachteile des Stands der Technik zu überwinden.

Diese Aufgabe wird mit einem Verfahren der eingangs genannten Art erfindungsgemäß dadurch gelöst, dass die Fehlertoleranzschicht eigene, von den Datenstrukturen des Kommunikationskontrollers und der Knotensteuerung unabhängige Datenstrukturen für die Auswahl eines Abstimmungsalgorithmus und der zur Abstimmung herangezogenen Beurteilungsnachrichten verwendet.

Dank der Erfindung können andere Netzwerkknoten eine fehlerhafte Applikation bzw. Recheneinheit zu einem bestimmten, dem Sicherheitsdesign entsprechenden Verhalten zwingen und somit bestimmte Fehlerszenarien des Gesamtsystems kontrolliert gesteuert werden. Durch den Abstimmungsmechanismus in der Fehlertoleranzschicht kann dabei verhindert werden, dass ein fehlerhafter Netzwerkknoten einen Einfluss auf andere Knoten im System haben kann. Somit kann sichergestellt werden, dass kein Einzeifehler zu einem Fehler des Gesamtsystems führen kann.

Gemäß einer Variante der Erfindung kann das Ergebnis der Abstimmung als digitales Ausgangssignal an zumindest einem Pin des Kommunikationskontrollers zur Verfügung gestellt werden.

Günstigerweise werden in das Abstimmungsverfahren Membershipinformationen des jeweiligen Kommunikationskontrollers miteinbezogen. Dadurch kann das Auftreten eines fehlerhaften Knotens, der andere Knoten daran hindert, Beurteilungsnachrichten zu senden, in dem der fehlerhafte Knoten die Zeitschlitze anderer Knoten belegt, bei der Abstimmung berücksichtigt werden.

Darüber hinaus kann das Abstimmungsergebnis auch netzwerkknotenintern in einem Speicherbereich zur Verfügung gestellt werden.

Weitere Vorteile lassen sich dadurch erzielen, dass abhängig von dem Ausgangssignal zumindest ein Aktuator in einen bevorzugten oder sicheren Zustand gebracht wird.

Günstigerweise erfolgt die Kommunikation zwischen den Netzwerkknoten zeitgesteuert nach dem TTP/C Protokoll.

Die Erfindung samt weiterer Ausführungsbeispiele wird im Folgenden anhand einiger nicht einschränkender Ausführungsbeispiele näher erläutert, welche in der Zeichnung dargestellt sind. In dieser zeigen schematisch:
Fig.1 ein verteiltes Computersystem mit zeitgesteuerter Kommunikation;
Fig. 2 einen logischen Aufbau eines Netzwerkknotens mit Fehlertoleranzschicht;
Fig. 3 eine vereinfachte Darstellung einer Brake-by-wire Architektur.

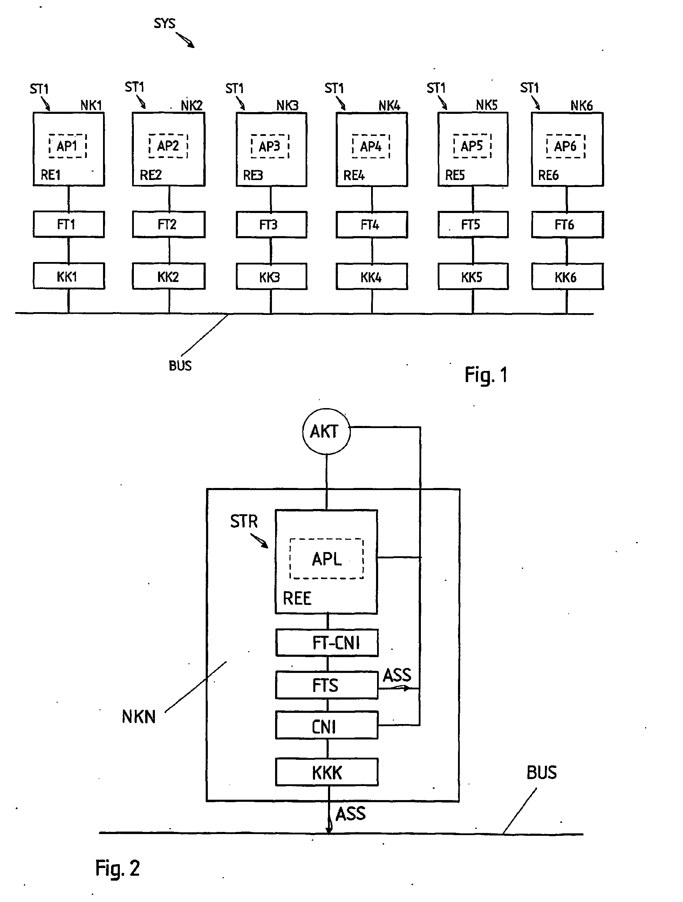

Fig. 1 zeigt eine schematische Darstellung eines verteilten Computersystems SYS mit sechs Netzwerkknoten NK1-NK6, die jeweils aus einer Knotensteuerung ST1-ST6 und einem Kommunikationskontroller KK1-KK6 aufgebaut sind, wobei die Kommunikationskontroller über einen Bus BUS1 miteinander verbunden sind. Unter einer Knotensteuerung ST1-ST6 wird in diesem Dokument eine Recheneinheit RE1-RE6 verstanden, die dazu eingerichtet ist, beispielsweise mittels entsprechender Softwareapplikationen AP1-AP6, dem jeweiligen Netzwerkknoten NK1-NK6 im Rahmen des Computersystems SYS zugedachte Steuerungsaufgaben bzw. im allgemeinen Sinn Aufgaben auszuführen, z. B. die Betätigung eines Aktuators.

Bevorzugterweise erfolgt die Kommunikation zwischen den Netzwerkknoten NK1-NK6 nach einem zeitgesteuerten Übertragungsprotokoll, beispielsweise dem TTP/C-Protokoll. Zu dem Begriff des TTP/C-Protokoll siehe beispielsweise auch die EP 146 612.

Einige oder alle der Netzwerkknoten NK1-NK6 können das Verhalten bzw, den Betriebszustand anderer Netzwerkknoten NK1-NK6 überprüfen, wobei die Überprüfung gegenseitig erfolgen kann. Somit kann ein Knoten, der einen anderen Knoten überprüft, seinerseits von anderen Knoten überprüft werden Die Ergebnisse der Überprüfungen werden als Beurteilungsnachrichten zwischen den Kommunikationskontrollern KK1-KK6 der Netzwerkknoten NK1-NK6 über den Bus BUS ausgetauscht

Zwischen den Knotensteuerungen ST1-ST6 und den Kommunikationskontrollern KK1-KK6 befindet sich jeweils eine Fehlertoleranzschicht FT1-FT6, welche die über den Bus BUS übertragenen Beurteilungsnachrichten übernimmt und anhand der einzelnen Beurteilungsnachrichten ein Abstimmungsverfahren über das Funktionieren von Netzwerknoten durchführt durchführt. Zu dem Begriff der Fehlertoleranzschicht siehe beispielsweise: "Transparent Redundancy in the Time Triggered Architecture; G. Bauer and H. Kopetz; Dependable Systems and Networks (DSN 200), New York, IEEE Press. p. 5-13." Praktisch läst sich eine Fehlertoleranzschicht, beispielsweise durch einen entsprechend programmierten Mikroprozessor, der zwischen dem Kommunikationskontroller KK1-KK6 und der Knotensteuerung ST1-ST2 angeordnet ist, realisieren. Eine andere Möglichkeit zur Realisierung einer Fehlertoleranzschicht besteht darin, diese in einem Kommunikationskontroller als Hardwareeinheit zu implementieren.

Für die an sich beliebigen Varianten des Abstimmungsverfahrens kommen insbesondere folgende Algorithmen in Betracht:
- Bei einer Anzahl n von der Fehlertoleranzschicht FT im Rahmen der Abstimmung verwendeten Beurteilungsnachrichten muss eine Anzahl m von Beurteilungsnachrichten größer als n/2 sein, um zu einem Ergebnis zu führen (Mehrheitsabstimmung);
- Oder es müssen alle in Betracht gezogenen Beurteilungsnachrichten gleich sein (n=n) - Einstimmigkeit.

Das Abstimmungsergebnis kann netzwerkknotenintern in einem Speicherbereich und an einem Hardwareausgang des Kommunikationskontrollers KK1-KK6, beispielsweise einem Pin des Kommunikationskontrollers KK1-KK6, als digitales oder analoges Ausgangssignal ASS zur Verfügung gestellt werden Abhängig von dem Ausgangssignal ASS kann, wie weiter unten beschrieben, ein Neustart bzw. eine Not Ausschaltung einer Recheneinheit erzwungen und/oder ein Aktuator AKT in einen bevorzugten oder sicheren Zustand gebracht werden.

Gemäß Fig. 2 weist ein Netzwerkknoten NKN eine Knotensteuerung STR (eine Recheneinheit REE mit entsprechenden Softwareapplikationen), beispielsweise eine entsprechend programmierte CPU (Central Processing Unit), und einen Kommunikationskontroller KKK auf. Zwischen der Recheneinheit REE und dem Kommunikationskontroller KKK befindet sich eine Datenschnittstelle CNI, über die aus Sicherheitsgründen keine Steuersignale ausgetauscht werden können, sowie die bereits oben erwähnte Fehlertoleranzschicht FTS.

Der Kommunikationskontroller KKK steuert den Kommunikationsablauf mit den anderen Netzwerkknoten über den Bus BUS. Dabei werden Daten aus der Datenschnittstelle CNI ausgelesen und entsprechend dem verwendeten zeitgesteuerten Kommunikationsschema in a priori definierten Zeitfenstern gesendet Ebenso werden für die Recheneinheit REE empfangene Botschaften in der Datenschnittstelle CNI abgelegt. Aufgabe der Fehlertoleranzschicht FTS ist es unter anderem, die in der Datenschnittstelle CNI abgelegten Daten für die auf der Rechnereinheit REE ablaufenden Softwareapplikationen APL zur Steuerung des Netzwerkknotens NWK bzw. des Aktuators entsprechend den Erfordernissen aufzubereiten und in der Datenschnittstelle FT-CNI zwischen der Fehlertoleranzschicht FTS und der Recheneinheit REE abzulegen. Zum Beispiel werden redundante Botschaften zu einer Variablen zusammengefasst, Werte transformiert oder spezielle Variablen errechnet und somit die auf der Rechnereinheit REE abgelegten Softwareapplikation(en) APL von Routinetätigkeiten und Komplexität entlastet. Die Softwareapplikation(en) APL übernehmen letztendlich die Ansteuerung des Aktuators AKT, beispielsweise eines Bremsaktuators.

Entsprechend der Erfindung kann die Fehlertoleranzschicht FTS, wie bereits oben erwähnt, das Abstimmungsergebnis als Ausgangssignal ASS zur Verfügung stellen. Dieses Ausgangssignal ASS kann netzknotenintern in einem Speicherbereich zur Verfügung gestellt werden, beispielsweise in einem Bereich der Datenschnittstelle CNI.

Diese Datenschnittstelle CNI und/oder die Fehlertoleranzschicht FTS kann mit der Recheneinheit REE verbunden sein, sodass das Ausgangssignal ASS im Bedarfsfall an die Rechnereinheit REE übertragen werden kann, wobei die Recheneinheit REE dazu eingerichtet sein kann, sich bei einem vorgebbaren Wert des Ausgangssignal ASS abzuschalten oder neu zu starten. Somit kann durch das Ausgangssignal ASS ein Neustart oder Notabschalten der Knotensteuerung STR erzwungen werden. Darüber hinaus kann die Datenschnittstelle CNI und/oder die Fehlertoleranzschicht FTS mit einem Aktuator AKT verbunden sein, sodass dieser abhängig von dem Wert des Ausgangssignals ASS in einen bevorzugten bzw. sicheren Zustand versetzt werden kann.

Für das Abstimmungsverfahren selbst sind, wie bereits oben erwähnt, prinzipiell mehrere Varianten vorstellbar. Wesentlich hierbei ist jedoch das Vorhandensein der Pehlerboleranzschicht FTS zwischen Kommunikationskontroller KKK und Recheneinheit REE, wobei die Fehlertoleranzschicht FTS das Abstimmungsverfahren unabhängig von der Rechnereinheit REE durchführt und das Abstimmungsergebnis als Ausgangssignal ASS zur Verfügung stellt

Um die Unabhängigkeit der Fehlertoleranzschicht FTS zu gewährleisten, kann die Fehlertoleranzschicht FTS von den Datenstrukturen des Kommunikationskontrollers KKK und der Knotensteuerung STR unabhängige Datenstrukturen für die Auswahl eines Abstimmungsalgorithmus und der zur Abstimmung herangezogenen Beurteilungsnachrichten aufweisen.

Bevorzugterweise wird mit dem erfindungsgemäßen Verfahren in der Fehlertoleranzschicht FTS das Funktionieren des der Fehlertoleranzschicht FTS zugeordneten Knotens NKN kontrolliert, wobei in diesem Fall das Ausgangssignal ASS sich auf das Funktionieren dieses Knotens NKN bezieht. Die zur Abstimmung herangezogenen Beurteilungsnachrichten der anderen Knoten betreffen dann natürlich ebenfalls den Zustand des Knotens NKN.

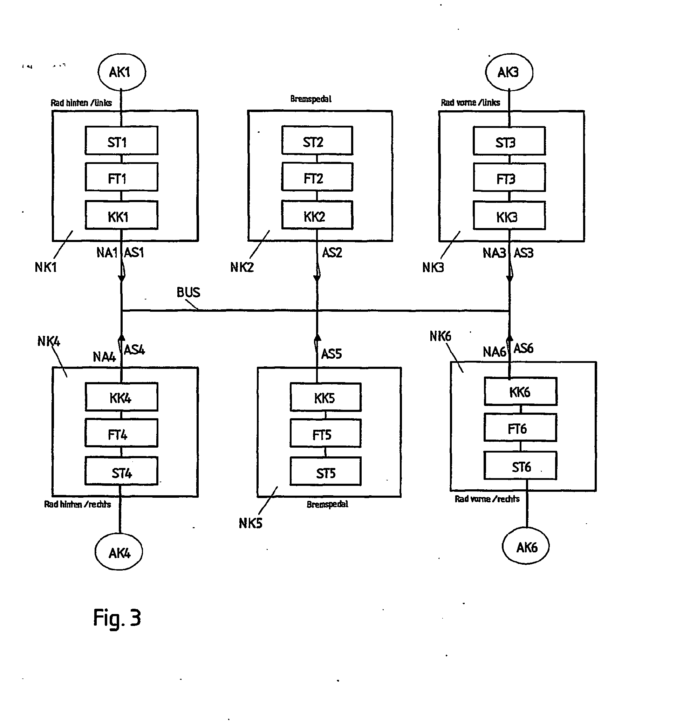

Fig. 3 stellt eine vereinfachte Darstellung einer möglichen Brake-by-wire Architektur dar. Hierbei übernimmt jeweils ein Netzwerkknoten NK1, NK3, NK4, NK6 die Steuerung eines Rades. Zwei Netzwerkknoten NK2, NK5 erfassen redundant die Bremspedalstellung. Die Netzwerkknoten NK1-NK6 sind durch einen Bus BUS miteinander verbunden, der im Normalfall aus zwei Kommunikationskanälen besteht, welche alle sicherheitsrelevanten Botschaften redundant übertragen. und weisen jeweils einen TTP/C Kommunikationskon troller, eine Fehlertoleranzschicht FT1-FT6 und eine Knotensteuerung ST1-ST6 auf. Prinzipiell kann anstelle des TTP/C Protokolls jedoch auch ein andere zeitgesteuertes Kommunikationsprotokoll zum Einsatz kommen. Durch die Erfindung ist, die Einführung einer zusätzlichen Kontrolle über das Verhalten der Knotensteuerungen ST1-ST6 und der mit diesen verbundenen Aktuatoren ermöglicht, wobei keine Abstriche hinsichtlich der Sicherheit des Gesamtsystems gemacht werden müssen.

Um einen Einzelfehler tolerieren zu können, müssen die Netzwerkknoten NK2, NK5, die der Erfassung der Bremspedalstellung dienen, redundant ausgeführt werden. Da ein typischer Personenkraftwagen über vier gebremste Räder verfügt, kann der Ausfall einer einzelnen Rad-Bremse toleriert werden. Daher befindet sich an jedem Rad nur ein Netzwerkknoten NK1, NK3, NK4, NK6 für die Bremssteuerung.

Auf jeder Recheneinheit eines Radknotens läuft eine Softwareapplikation, die das Verhalten der anderen Recheneinheiten an den Rädern kontrolliert Somit können die Knotensteuerungen ST1-ST6 die anderen Knotensteuerungen ST1-ST6 überwachen. Als Daten für diese Kontrollaufgaben können sowohl Botschaften, die über den Bus BUS gesendet werden als auch Messdaten über das Fahrzeugverhalten herangezogen werden. Die Beurteilung der anderen Recheneinheiten bzw. Netzwerkknoten NK1-NK6 wird als Beurteilungsnachricht NA1-NA6 über den Bus versandt. Jeder Kommunikationskontroller KK1-KK6 empfängt nun in jeder Kommunikationsrunde die Beurteilungsbotschaften NA1, NA3, NA4, NA6 der drei anderen Radknoten und legt diese in der im zugeordneten Datenschnittstelle CNI ab. Die unabhängige Fehlertoleranzschicht FT1-FT6 jedes Netzknotens kann aus den empfangenen Beurteilungsnachrichten NA1-NA6 zusammen mit der lokalen Botschaft des jeweiligen Knotens ihr Abstimmungsergebnis bilden und dieses als Ausgangssignal AS1-AS6 in dem jeweiligen Netzknoten NK1-NK6 intern als auch an einem Hardwareausgang des zugehörigen Kommunikationskontrollers KK1-KK6 zur Verfügung stellen.

Als grundsätzliches Abstimmungsverfahren kommen, wie bereits oben erwähnt, Mehrheitsbeschluss oder Einstimmigkeit in Frage. Darüber hinaus kann in das Abstimmungsergebnis die Membershipinformation miteinbezogen werden, sofern das zeitgesteuerte Kommunikationsprotokoll über eine solche verfügt. TTP/ C bietet einen verteilten Membershipinformati onsdienst, der für die Abstimmung herangezogen werden kann. Durch die Verknüpfung mit der Membershipinformation ergeben sich folgende Varianten für die Abstimmung verwendeten:
- Verwendung nur der Membershipinformation;
- Verwendung dedizierter Botschaften (Beurbeilungsnachrichten) für das Abstimmungsverfahren;
- Verwendung dedizierter Botschaften und der Membershipinformation.

Kommen nun die Netzwerkknoten NK1-NK6 mehrheitlich bzw. einstimmig überein, dass das Verhalten einer Recheneinheit bzw. der dort ablaufenden Softwareapplikation die Sicherheit des Gesamtsystems gefährdet, erzeugt die Fehlertoleranzschicht FT1-FT6 dieses Knotens ein entsprechendes Ausgangssignal AS1-AS6.

Es ist bei der a priori Konfiguration des Systems festzulegen, welche Konsequenzen aus einem solchen Abstimmungsergebnis zu ziehen sind. In dem angeführten Beispiel erscheint es sinnvoll, sowohl den Bremsaktuator in einen sicheren Zustand zu bringen als auch einen Neustart der fehlerhaften Recheneinheit zu erzwingen, um vorübergehende Fehler der Software-Applikation(en) zu beheben.

Da bei jeder Kommunikationsrunde erneut abgestimmt wird, kann nach erfolgter Reintegration des Netzwerkknotens die Kontrolle über den verbundenen Aktuator wieder an die zugeordnete Kontensteuerung bzw. Recheneinheit übergeben werden.

Da die Information über das Abstimmungsergebnis sowohl intern in der jeweiligen Datenschnittstelle CNI zur Verfügung steht, als auch von dem Kommunikationskontroller KK1-KK6 an die anderen Netzwerkknoten NK1-NK6 übertragen wird, können diese auf das Fehlverhalten entsprechend reagieren, indem z. B. die Bremskraft der Situation entsprechend neu verteilt wird.

Die Einführung einer unabhängigen Fehlertoleranzschicht für ein Abstimmungsverfahren schafft nun die Möglichkeit der gegenseitigen Kontrolle von Recheneinheiten über den zeitgesteuerten Bus und die Datenschnittstelle CNI hinweg. Dies ist notwendig, um auf bestimmte Fehlerszenarien richtig reagieren zu können. Trotzdem kann auf diese Weise sichergestellt werden, dass kein Einzelfehler die Sicherheit des Gesamtsystems gefährdet.

## Patentansprüche

1. Verfahren zum Betrieb eines verteilten Computersystems (SYS) mit Netzwerkknoten (NKN, NK1-NK6), die jeweils zumindest eine Knotensteuerung (STR, ST1-ST6) und einen Kommunikationskontroller (KK1-KK6) aufweisen, wobei die Kommunikations-kontroller (KKK, KK1-KK6) über zumindest einen Kommunikationskanal (BUS) mit-einander verbunden sind, zwischen dem Kommunikationskontroller (KK1-KK6) und der Knotensteuerung (STR, ST1-ST6) eines Netzwerkknotens (NKN, NK1-NK6) eine Fehlertoleranzschicht (FTS, FT1-FT6) vorgesehen ist, welche dazu eingerichtet ist zwischen den Netzwerkknoten (NKN, NK1-NK6) ausgetauschte Nachrichten zu empfangen, und die Fehlertoleranzschicht (FTS, FT1-FT6) anhand von empfangenen Informationen, welche den Zustand zumindest eines Netzwerkknoten (NKN, NK1-NK6) betreffen, mittels eines Abstimmungsverfahrens über das Funktionieren des zumindest einen Netzwerkknoten (NK1-NK6) entscheidet, wobei das Abstimmungsergebnis als Ausgangssignal (ASS, AS1-AS6) an einem oder mehreren Hardwareausgängen des Kommunikationskontrollers (KKK, KK1-KK6) zur Verfügung gestellt wird und der zumindest eine Netzwerkknoten (NKN, NK1-NK6) in Abhängigkeit von diesem Ausgangssignal (ASS, AS1-AS6) gesteuert wird **dadurch gekennzeichnet, dass** die Fehlertoleranzschicht (FTS, FT1-FT6) eigene, von den Datenstrukturen des Kommunikationskontrollers (KKK, KK1-KK6) und der Knotensteuerung (STR, ST1-ST2) unabhängige Datenstrukturen für die Auswahl eines Abstimmungsalgorithmus und der zur Abstimmung herangezogenen Beurteilungsnachrichten (NA1-NA6) verwendet.

2. Verfahren nach Anspruch 1, **dadurch gekennzeichnet, dass** das Ergebnis der Abstimmung als digitales Ausgangssignal an zumindest einem Pin des Kommunikationskontrollers (KKK, KK1-KK6) zur Verfügung gestellt wird.

3. Verfahren nach Anspruch 1 oder 2, **dadurch gekennzeichnet, dass** in das Abstimmungsverfahren Membershipinformationen des jeweiligen Kommunikationskontrollers (KKK, KK1-KK6) miteinbezogen werden.

4. Verfahren nach einem der Ansprüche 1 bis 3, **dadurch gekennzeichnet, dass** das Abstimmungsergebnis netzwerkknotenintern in einem Speicherbereich zur Verfügung gestellt wird. ,

5. Verfahren nach einem der **Ansprüche** 1 bis 4, **dadurch gekennzeichnet, dass** abhängig von dem Ausgangssignal (ASS, AS1-AS6) zumindest eine Knotensteuerung (STR, ST1-ST6) neu gestartet wird.

6. Verfahren nach einem der Ansprüche 1 bis 5, **dadurch gekennzeichnet, dass** abhängig von dem Ausgangssignal (ASS, AS1-AS6) ein Notausschalten einer Knotensteuerung (ST1-ST6) erfolgt.

7. Verfahren nach einem der Ansprüche 1 bis 6, **dadurch gekennzeichnet, dass** zumindest ein Netzknoten (NKN, NK1-NK6) einen mit der Knotensteuerung (STR, ST1-ST6) verbundenen Aktuator (AKT, AK1-AK4) aufweist und der Aktuator (AKT, AK1-AK4) in Abhängigkeit von dem Ausgangssignal (ASS, AS1-AS6) in einen bevorzugten oder sicheren Zustand gebracht wird.

8. Verfahren nach einem der Ansprüche 1 bis 7, **dadurch gekennzeichnet, dass** die Kommunikation zwischen den Netzwerkknoten (NKN, NK1-NK6) zeitgesteuert nach dem TTP/C Protokoll erfolgt.

## Claims

1. A method of operating a distributed computer system (SYS) comprising network nodes (NKN, NK1 to NK6) having at least one node controller (STR, ST1 to ST6) and one communications controller (KK1 to KK6), which communications controllers (KKK, KK1 to KK6) are interconnected via at least one communication channel (BUS), a fault tolerance layer (FTS, FT1 to FT6) being provided between said communications controller (KK1 to KK6) and said node controller (STR, ST1 to ST6) of a network node (NKN, NK1 to NK6) for the reception of information exchanged between the network nodes (NKN, NK1 to NK6), which fault tolerance layer (FTS, FT1 to FT6) uses received information concerning the state of at least one network node (NKN, NK1 to NK6) to decide the mode of functioning of at least one of the network nodes (NK1 to NK6) by way of a tuning procedure, the tuning result being delivered to one or more hardware outputs of the communications controller (KKK, KK1 to KK6) while at least one network node (NKN, NK1 to NK6) is controlled as a function of said output signal (ASS, AS1 to AS6), **characterized in that** said fault tolerance layer (FTS, FT1 to FT6) uses its own data structures, which are independent of the data structures of the communications controllers (KKK, KK1 to KK6) and of the node controller (STR, ST1 to ST2), for selecting a tuning algorithm and the evaluation information (NA1 to NA6) used for the tuning.

2. The method as defined in claim 1, **characterized in that** the tuning result is delivered as a digital output signal to at least one pin of the communications controller (KKK, KK1 to KK6).

3. The method as defined in claim 1 or claim 2, **characterized in that** membership information of the respective communications controller (KKK, KK1 to KK6) is incorporated into the tuning procedure.

4. The method as defined in any one of claims 1 to 3, **characterized in that** the tuning result is made available and stored internally in the network node.

5. The method as defined in any one of claims 1 to 4, **characterized in that** at least one node controller is restarted as a function of said output signal (ASS, AS1 to AS6).

6. The method as defined in any one of claims 1 to 5, **characterized in that** an emergency shutdown of node controller (ST1 to ST6) occurs as a function of said output signal (ASS, AS1 to AS6).

7. The method as defined in any one of claims 1 to 6, **characterized in that** at least one network node (NKN, NK1 to NK6) has an actuator (AKT, AK1 to AK4) which is connected to a node controller and said actuator (AKT, AK1 to AK4) is brought into a preferential or secure state as a function of said output signal (ASS, AS1 to AS6).

8. The method as defined in any one of claims 1 to 7, **characterized in that** the communication between the network nodes (NKN, NK1 to NK6) occurs as a time-controlled communication according to the TTP/C protocol.

## Revendications

1. Procédé d'destiné à l'exploitation d'un système informatique réparti (SYS) ayant des noeuds de réseau (NKN, NK1-NK6), lesquels sont pourvus d'au moins une commande de noeud (STR, ST1-ST6) et d'un contrôleur de communication (KK1-KK6), les contrôleurs de communication (KKK, KK1-KK6) étant reliés les uns aux autres par l'intermédiaire d'au moins un canal de communication (BUS), une couche de tolérance d'erreur (FTS, FT1-FT6) étant prévue entre le contrôleur de communication (KK1-KK6) et la commande de noeud (STR, ST1-ST6) d'un noeud de réseau (NKN, NK1-NK6), laquelle est conçue pour recevoir des informations échangées entre les noeuds de réseau (NKN, NK1-NK6) et la couche de tolérance d'erreur (FTS, FT1-FT6) décide, à l'aide d'informations reçues concernant l'état d'au moins un noeud de réseau (NKN, NK1-NK6), du fonctionnement d'au moins un noeud de réseau (NK1-NK6) par l'intermédiaire d'un procédé d'accord, le résultat de l'accord étant mis à disposition en tant que signal de sortie (ASS, AS1-AS6) au niveau d'une ou plusieurs sorties matérielles du contrôleur de communication (KKK, KK1-KK6), et au moins un noeud de réseau (NKN, NK1-NK6) est commandé en fonction de ce signal de sortie (ASS, AS1-AS6), **caractérisé en ce que** la couche de tolérance d'erreur (FTS, FT1-FT6) utilise des structures de données propres, indépendantes des structures de données du contrôleur de communication (KKK, KK1-KK6) et de la commande de noeud (STR, ST1-ST6), en vue de la sélection d'un algorithme d'accord et des informations d'évaluation (NA1-NA6) consultées en vue de l'accord.

2. Procédé selon la revendication 1, **caractérisé en ce que** le résultat de l'accord est mis à disposition en tant que signal de sortie au niveau au moins d'une broche du contrôleur de communication (KKK, KK1-KK6).

3. Procédé selon la revendication 1 ou 2, **caractérisé en ce que** des informations d'appartenance du contrôleur de communication (KKK, KK1-KK6) sont incluses dans le procédé d'accord.

4. Procédé selon l'une quelconque des revendications 1 à 3, **caractérisé en ce que** le résultat de l'accord est mis à disposition de manière interne au noeud de réseau dans une zone de stockage.

5. Procédé selon l'une quelconque des revendications 1 à 4, **caractérisé en ce qu'**au moins une commande de noeud (STR, ST1-ST6) est démarrée à nouveau en fonction du signal de sortie (ASS, AS1-AS6).

6. Procédé selon l'une quelconque des revendications 1 à 5, **caractérisé en ce qu'**un arrêt d'urgence d'une commande de noeud (ST1-ST6) est effectuée en fonction du signal de sortie (ASS, AS1-AS6).

7. Procédé selon l'une quelconque des revendications 1 à 6, **caractérisé en ce qu'**au moins un noeud de réseau (NKN, NK1-NK6) est pourvu d'un actionneur (AKT, AK1-AK4) relié à la commande de noeud (STR, ST1-ST6) et **en ce que** l'actionneur (AKT, AK1-AK4) est amené dans un état préféré ou sûr en fonction du signal de sortie (ASS, AS1-AS6).

8. Procédé selon l'une quelconque des revendications 1 à 7, **caractérisé en ce** la communication entre les noeuds de réseau (NKN, NK1-NK6) est effectuée en fonction du temps selon le protocole TTP/C.
